(19) Europäisches Patentamt
European Patent Office
Office européen des brevets

(11) EP 3 107 035 B1

(12) FASCICULE DE BREVET EUROPEEN

(45) Date de publication et mention de la délivrance du brevet:
**15.02.2023 Bulletin 2023/07**

(21) Numéro de dépôt: **16174661.5**

(22) Date de dépôt: **15.06.2016**

(51) Classification Internationale des Brevets (IPC):
**G06V 40/18** $^{(2022.01)}$

(52) Classification Coopérative des Brevets (CPC):
**G06V 40/197; G06T 7/11**

(54) **PROCÉDÉ D'IDENTIFICATION OU D'AUTHENTIFICATION D'UN INDIVIDU PAR RECONNAISSANCE D'IRIS**

VERFAHREN ZUR IDENTIFIZIERUNG ODER AUTHENTIFIZIERUNG EINER PERSON DURCH IRISERKENNUNG

METHOD FOR IDENTIFYING OR AUTHENTICATING AN INDIVIDUAL BY MEANS OF IRIS RECOGNITION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.06.2015 FR 1555440**

(43) Date de publication de la demande:
**21.12.2016 Bulletin 2016/51**

(73) Titulaire: **Idemia Identity & Security France
92400 Courbevoie (FR)**

(72) Inventeurs:
  • KRICHEN, Emine
    92130 Issy-les-Moulineaux (FR)
  • GACON, Pierre
    92130 Issy-les-Moulineaux (FR)
  • GENTRIC, Stéphane
    92130 Issy-les-Moulineaux (FR)

(74) Mandataire: **Idemia
2, place Samuel de Champlain
92400 Courbevoie (FR)**

(56) Documents cités:
  • MASEK L: "Recognition of Human Iris Patterns for Biometric Identification", INTERNET CITATION, 2003, XP002386033, Extrait de l'Internet: URL:http://144.122.166.80/reading/texts/iris_recog/LiborMasekThesis.pdf [extrait le 2006-01-01]
  • ANDREAS UHL ET AL: "Enhancing Iris Matching Using Levenshtein Distance with Alignment Constraints", 29 novembre 2010 (2010-11-29), ADVANCES IN VISUAL COMPUTING, SPRINGER BERLIN HEIDELBERG, BERLIN, HEIDELBERG, PAGE(S) 469 - 478, XP019157726, ISBN: 978-3-642-17288-5 * le document en entier *
  • MA L ET AL: "Efficient Iris Recognition by Characterizing Key Local Variations", IEEE TRANSACTIONS ON IMAGE PROCESSING, IEEE SERVICE CENTER, PISCATAWAY, NJ, US, vol. 13, no. 6, 1 juin 2004 (2004-06-01), pages 739-750, XP011112971, ISSN: 1057-7149, DOI: 10.1109/TIP.2004.827237

**Description**

DOMAINE TECHNIQUE GENERAL

L'invention a pour objet un procédé amélioré d'identification ou d'authentification biométrique par reconnaissance d'iris.

ETAT DE LA TECHNIQUE

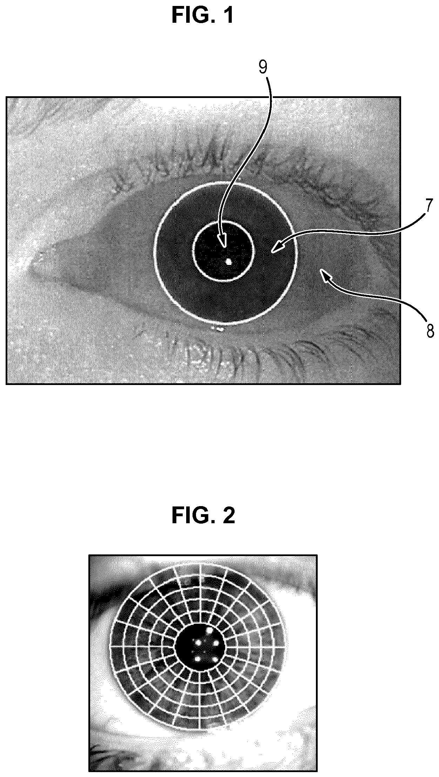

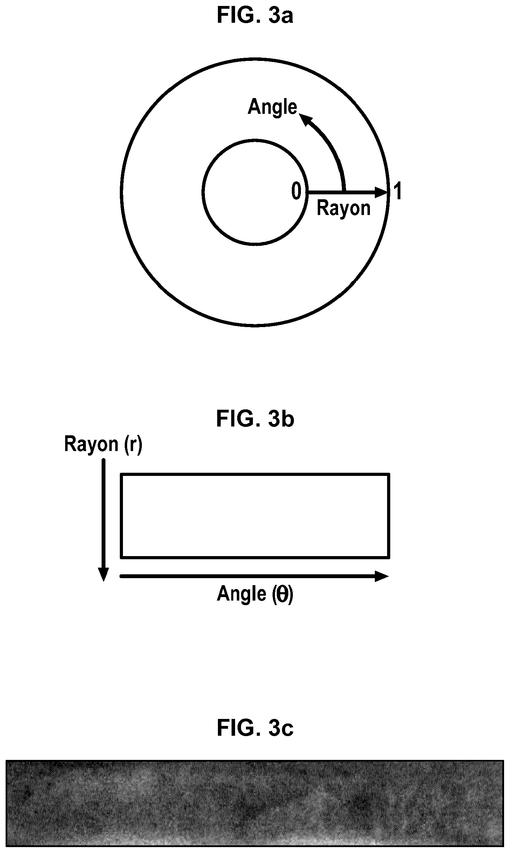

Afin de comparer l'iris d'un individu à des données d'iris mémorisées dans une base de données de référence, l'iris de cet individu doit être caractérisé numériquement. Pour cela, une méthode communément employée est la méthode de Daugman (US5291560). Cette méthode prévoit que l'image de l'œil à analyser est segmentée afin d'isoler la partie de l'image correspondant à l'iris de l'individu, comme représenté en **figure 1**. Afin de pouvoir comparer cette partie d'image aux données d'iris de référence, la zone de l'iris à analyser peut ensuite être découpée en un certain nombre de zones angulaires, et découpée radialement en un certain nombre d'anneaux, comme représenté en **figure 2**.
Afin de pouvoir comparer efficacement l'iris à analyser aux iris de référence malgré une dilatation variable selon les conditions de prise de vue, l'image de l'iris à analyser peut être normalisée sous la forme d'une image rectangulaire de taille fixe, transformant ainsi les coordonnées cartésiennes de l'image d'origine en coordonnées polaires, comme représenté en **figures 3a à 3c**. Afin de transformer cette image normalisée en code binaire, dit code d'iris, un filtrage, par exemple de Gabor, peut être appliqué à diverses zones de cette image, par exemple à chaque zone correspondant à l'intersection d'un anneau et d'un secteur angulaire. Une valeur binaire 0 ou 1 peut alors être attribuée à chaque zone en fonction du signe du résultat du filtrage sur cette zone. Un tel code binaire peut ensuite être aisément comparé bit à bit à un ou plusieurs codes binaires de référence stockés dans une base de données afin d'identifier ou d'authentifier l'individu dont l'iris a été analysé. Une telle comparaison binaire revient à comparer entre elles des zones de l'iris positionnées à la même position dans l'image normalisée. A noter que les bords gauche et droit de l'image normalisée correspondent en réalité à des zones voisines de l'iris et doivent être considérés comme tel dans les analyses postérieures à la normalisation.
Une telle normalisation compenserait parfaitement une dilatation/contraction linéaire de l'iris en fonction de la luminosité. En pratique la dilatation de l'iris observée est loin d'être linéaire. Un anneau de l'iris peut alors se trouver à différentes positions dans l'image normalisée en fonction de la dilatation de la pupille. Dans ce cas, la comparaison bit à bit des codes binaires peut revenir à comparer entre elles des zones de l'image normalisées qui ne correspondent en fait pas à des zones identiques de l'iris. De plus, le mouvement de l'iris lors de la dilatation de la pupille se fait en trois dimensions. Certains anneaux de l'iris peuvent apparaître ou disparaitre lors de la dilatation du fait du chevauchement de différentes zones de l'iris.
Des modèles complexes ont été proposés afin de modéliser plus finement le mouvement de l'iris en fonction de la dilatation tel que le modèle de Wyatt (Harry Wyatt, « A minimum wear-and-tear meshwork for the iris », Vision Research 40 (2000) 2167-2176*).* Mais un tel modèle ne prend pas en compte l'apparition ou la disparition de zones de l'iris. Un modèle tel que le modèle de Clark *(*A. Clark, S. Kulp, I. Herron and A ; Ross, « A theorical model for describing iris dynamics », Handbook of Iris Récognition, pp. 129-150, 2013 ») permet de prendre en compte à la fois une variation non linéaire de l'iris et une apparition/disparition de certaines zones de l'iris. Néanmoins, la prédiction du mouvement de l'iris par un tel modèle est fonction d'un paramètre, dit paramètre de Poisson, dont la valeur varie d'un individu à un autre. Il est donc nécessaire pour pouvoir reconnaitre un individu par son iris à l'aide d'un tel modèle de réaliser un apprentissage spécifique permettant de déterminer la valeur du paramètre de Poisson pour cet individu.
Dans l'article ("Inmaculada Tomeo-Reyes, Arun Ross, Antwan D. Clark, Vinod Chandran"A Biomechanical Approach to Iris Normalization) les auteurs proposent une méthodologie de normalisation de la texture de l'iris basée sur le modèle de Clark. Comme indiqué par les auteurs, cette méthodologie requière la connaissance du ratio de dilatation de la pupille de l'image de référence pour normaliser l'image de test. Si cette approche peut être acceptable pour un scénario de vérification (où l'image de référence est connue), elle devient impossible à mettre en oeuvre pour un scénario d'identification (où l'image de référence à comparer est inconnue). Les auteurs ont aussi fixé le paramètre de poisson à 0.49 pour toutes les personnes.
Afin de limiter la dépendance à de tels modèles complexes de dilatation de l'iris, des procédés d'identification ou d'authentification par reconnaissance d'iris ont été élaborés dans lesquels la dilatation de la pupille n'est pas prise en compte lors de l'étape de normalisation mais lors de l'étape de comparaison des codes binaires. De tels modèles tentent généralement, lors de la comparaison de deux images d'iris, de déterminer, le mouvement le plus probable des anneaux de l'iris entre ces deux images à partir des codes d'iris, avant de calculer une distance entre les images à partir des codes d'iris en tenant compte de ce mouvement. Chaque zone de l'iris dans l'image normalisée n'est alors plus nécessairement comparée à la zone correspondante de l'image de référence mais peut être comparée à une zone de cette image qui lui correspond mieux. Une telle comparaison prend mieux en compte la nature non linéaire du mouvement de l'iris en fonction de la dilatation de la pupille. Elle peut également prendre en compte les apparitions ou disparitions de certaines zones de l'iris. La distance entre les codes binaires comparés peut alors être réduite, améliorant ainsi l'efficacité du procédé de reconnaissance. A titre d'exemple, le procédé décrit dans Uhl&Wild (Andreas Uhl, Peter Wild, « Enhancing Iris Matching Using Levenshtein Distance with Alignement Constraints », In G. Bebis, R. Boyle, B. Parvin, D. Koracin, R. Chung, R. Hammoud, editors, Advances in Visual Computing : 6th International Symposium, (ISVC 2010) pp. 469-479, LNCS, 6453, Springer Verlag, 2010) propose de comparer bit à bit les codes binaires d'une image à analyser et d'une image de référence, et de prendre en compte lors d'une non concordance entre ces codes la possibilité que celle-ci soit le résultat d'une insertion ou d'une disparition d'une zone d'iris dans une des images, ou bien d'une substitution entre les zones d'iris correspondant aux bits en écart entre ces deux images. Chaque opération ayant un coût prédéterminé, le procédé propose de déterminer le jeu d'opérations de substitution, disparition et apparition permettant d'expliquer les différences entre les codes d'iris comparés pour le coût le plus faible. Un tel procédé a néanmoins pour défaut de traiter les codes binaires bit à bit et ne tient pas compte de la corrélation du mouvement d'une zone de l'iris et des autres zones appartenant au même anneau de l'iris. Une telle corrélation est importante du fait de la nature isotrope du mouvement de l'iris. Un tel traitement bit à bit augmente ainsi fortement la probabilité de faux positif lors de comparaison de deux images d'iris d'individus différents. On connait également l'article de Masek et al. « Recgnotion of Human Iris Patterns for Biométrie Identification ».

Il existe donc un besoin d'un procédé efficace d'identification ou d'authentification d'individu par reconnaissance d'iris permettant de prendre en compte la nature non linéaire du déplacement de l'iris ainsi que l'apparition ou la disparition de certaines zones de l'iris en fonction de la dilatation de la pupille, tout en tirant partie de la nature isotrope de ce mouvement, sans nécessiter un apprentissage spécifique à cet individu.

PRESENTATION DE L'INVENTION

La présente invention est définie par le procédé selon la revendication 1, par le produit programme selon la revendication 7, par le dispositif selon la revendication 8 et par le système selone la revendication 9.

PRESENTATION DES FIGURES

D'autres caractéristiques et avantages apparaîtront à la lecture de la description qui va suivre d'un mode de réalisation. Cette description sera donnée en référence aux dessins annexés dans lesquels :

- la figure 1 illustre la mise en oeuvre d'une étape de segmentation d'image d'un oeil d'un individu à identifier/authentifier ;

- la figure 2 illustre la mise en oeuvre d'une étape de division de la texture d'un iris en anneaux concentriques et secteurs angulaires ;

- les figures 3a à 3c illustrent la mise en oeuvre d'une étape de normalisation d'une région contenant la texture d'un iris ;

- la figure 4 illustre schématiquement des moyens matériels dans un système d'identification et/ou d'authentification d'un individu selon un mode de réalisation de l'invention;

- la figure 5 est un diagramme schématisant un procédé d'identification et/ou d'authentification d'un individu selon un mode de mise en oeuvre de l'invention ;

- les figures 6a à 6c représentent des images d'un oeil d'un individu présentant différentes dilatations de pupilles ;

- les figures 6d et 6e représentent des exemples de matrices de comparaison correspondant à la comparaison de deux images d'oeil présentant une dilatation de pupille représentées respectivement en figures 6a et 6b et en figures 6a et 6c ;

- la figure 7 illustre la mise en oeuvre de la détermination d'un chemin dans ledit treillis de Viterbi.

DESCRIPTION DETAILLEE

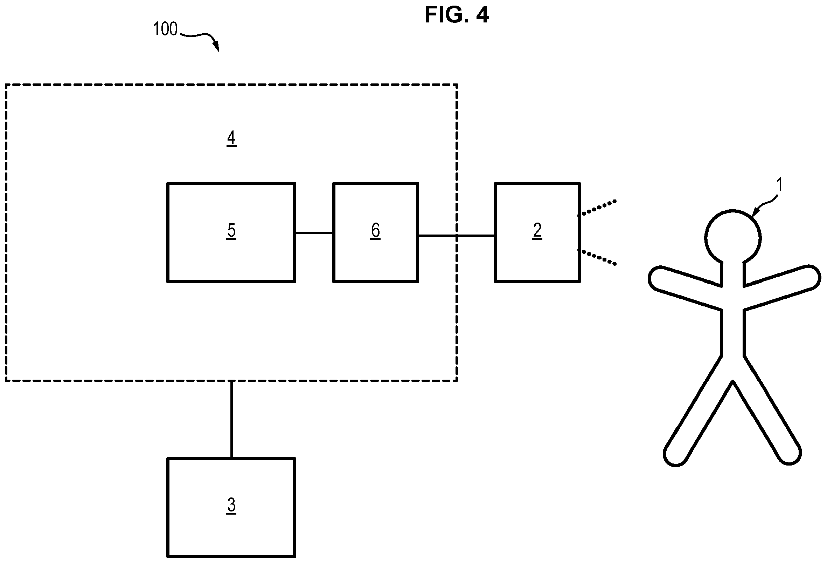

Un mode de réalisation de l'invention concerne un procédé d'identification et/ou d'authentification d'un individu 1 mis en oeuvre par un système 100 d'identification et/ou d'authentification d'un individu, illustré en **figure 4.**
Un tel système 100 comprend un dispositif de capture d'image 2 dédié à l'acquisition de données biométriques utilisées pour identifier ou authentifier l'individu 1. De telles données biométriques peuvent notamment consister en une image d'un oeil de l'individu 1. Le dispositif de capture d'image 2 peut notamment consister en un appareil photographique ou une caméra capturant une image dans le domaine visible ou dans le domaine infra-rouge.

Le système 100 comprend en outre un dispositif de stockage 3. Un tel dispositif de stockage est configuré pour stocker au moins un code binaire d'un iris de référence obtenu à partir d'une image d'iris de référence divisé en un premier nombre prédéterminé N1 d'anneaux concentriques, et un code binaire de masque de référence associé identifiant des régions de l'iris de référence dans lesquelles des paupières, des cils, des réflexions ou d'autres sources de bruit ont été détectés. Il peut s'agir de n'importe quel type de mémoire morte telle qu'une mémoire Flash ou un disque dur. Un tel dispositif de stockage peut stocker de tels codes binaires sous la forme d'une base de données.

Ces images d'iris de référence sont des images iris d'individus enregistrés dans le système pour pouvoir être identifiés ou authentifiés par celui-ci. Ces images d'iris de référence ont été traitées pour obtenir les codes d'iris de référence correspondants. Les traitements appliqués à ces images sont les mêmes que ceux décrits ci-dessous et appliqués à l'image de l'iris de l'individu à authentifier acquise par le dispositif de capture d'image 2.

Le système 100 comprend également un dispositif de traitement de données 4 configuré pour traiter l'image de l'iris de l'individu 1 acquise par le dispositif de capture d'images 2 afin d'en déduire un code d'iris correspondant et de le comparer aux codes d'iris de référence stockés. Un tel traitement comporte notamment le découpage de l'iris en un deuxième nombre prédéterminé N2 d'anneaux concentriques. Ledit dispositif de traitement est relié au dispositif de capture d'image 2 et au dispositif de stockage 3. Un tel dispositif de traitement de données peut comprendre un calculateur 5 et une interface de communication 6. Un tel calculateur 5 peut consister en un processeur ou microprocesseur, de type x-86 ou RISC par exemple, un contrôleur ou microcontrôleur, un DSP, un circuit intégré tel qu'un ASIC ou programmable tel qu'un FPGA, une combinaison de tels éléments ou tout autre combinaison de composants permettant de mettre en oeuvre les étapes de calcul du procédé décrit ci-dessous. Une telle interface de communication 6 peut être n'importe quelle interface, analogique ou numérique, permettant au calculateur 5 d'échanger des informations avec les autres éléments du système 100 décrits ci-dessus. Une telle interface peut par exemple être une interface série RS232, une interface USB, Firewire, HDMI ou une interface réseau de communication filaire ou sans fil de type Ethernet ou Wifi. Dans un mode de réalisation ledit dispositif de traitement, le dispositif de capture d'image 2 et le dispositif de stockage 3 peuvent être intégrés dans un boitier commun, par exemple dans le cas d'une intégration dans un téléphone portable ou dans un système de contrôle d'accès intégré contrôlant l'ouverture d'une issue. Alternativement, un ou plusieurs de ces dispositifs peuvent être distants du ou des autres dispositifs, par exemple le dispositif de capture d'image 2 consiste en une caméra de surveillance reliée par le biais d'un réseau de communication à un dispositif de traitement consistant en un serveur central d'un système informatique.

L'invention propose d'améliorer la comparaison de l'image de l'iris d'un individu à identifier ou authentifier et d'une image d'un iris de référence en déterminant une mise en correspondance optimale entre les anneaux de l'iris dans une image acquise de l'œil de l'individu et les anneaux de l'iris de référence. Une telle mise en correspondance permet de tenir compte de la distorsion de l'iris entre l'image acquise et l'image de référence du fait de la dilatation de la pupille. Cette dilation peut elle-même être la conséquence d'une différence d'exposition lumineuse entre les captures des deux images. Le procédé ne met pas forcément en correspondance tous les anneaux des deux iris, afin de pouvoir tenir compte d'éventuelles apparitions ou disparitions d'anneaux lors de la distorsion de l'iris.

Plus précisément, une telle mise en correspondance optimale est déterminée de façon à minimiser une distance, dite distance de correspondance ($HD_{Viterbi}$), entre l'image acquise et l'image de référence. Cette distance est calculée à partir du code d'iris déterminé pour l'image acquise et du code d'iris de référence, en tenant compte de la mise en correspondance choisie entre les anneaux des iris. Une telle mise en correspondance est déterminée dans un mode de mise en oeuvre à l'aide d'un algorithme de Viterbi.

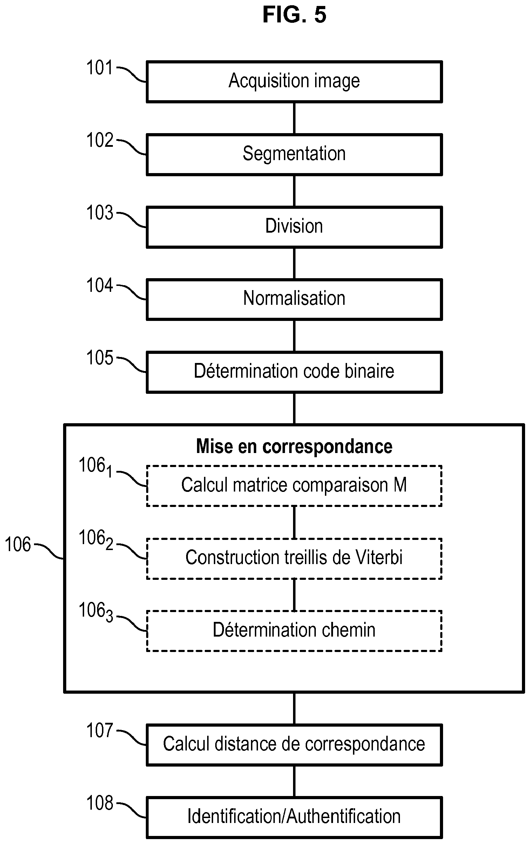

Le procédé d'identification et/ou d'authentification peut être mis en oeuvre selon les étapes représentées en **figure 5.**

Lors d'une étape d'acquisition 101, une image de l'œil de l'individu 1 est acquise par le dispositif de capture d'image 2. Cette image peut être en deux dimensions ou en trois dimensions, en couleurs ou en noir et blanc. Dans le cas d'une image numérique, celle-ci peut être encodée selon divers formats tels que les formats bitmap, jpeg, png, tiff, raw... Dans le cas d'une image en noir et blanc, celle-ci peut comporter un certain nombre de niveaux de gris.

Puis le dispositif de traitement de données met en oeuvre des étapes de segmentation 102, de division 103, de normalisation 104, de détermination de codes binaires 105, de mise en correspondance 106 et de calcul de distance 107.

Lors d'une étape de segmentation 102, l'image de l'œil acquise est segmentée de sorte à isoler une région contenant la texture de l'iris. Il s'agit sur la figure 1 de la région 7 comprise entre les cercles. La région d'iris est ainsi isolée du blanc de l'œil 8 et de la pupille 9. Lors de cette étape un masque associé identifiant des régions de l'iris dans lesquelles des paupières, des cils, des réflexions ou d'autres sources de bruit ont été détectés peut également être déterminé. Un tel masque peut notamment identifier une région de l'œil dans laquelle se reflète un spot lumineux destiné à imposer une exposition lumineuse prédéterminée lors de l'acquisition de l'image de l'œil.

Lors d'une étape de division 103, ladite région contenant la texture d'iris et ledit masque peuvent être divisés en N2 anneaux concentriques comme représenté en figure 2. Ces anneaux concentriques peuvent être d'épaisseurs constantes ou variées.

Ces anneaux concentriques peuvent également se chevaucher. Dans ce cas, la mise en correspondance des anneaux de deux images permet de prendre en compte la disparition ou l'apparition dans un iris d'une couronne d'épaisseur inférieure à celle d'un anneau.

Lors d'une étape de normalisation 104, la région contenant la texture de l'iris et ledit masque issues des étapes de segmentation et de division 102 et 103 sont normalisés sous la forme d'une image rectangulaire de taille fixe, transformant ainsi les coordonnées cartésiennes de l'image d'origine en coordonnées polaires, comme représenté en figures 3a à 3c suivant la transformation polaire proposée par Daugman : $I(x(r,\theta), y(r,\theta)) \rightarrow I(r,\theta)$ avec I l'image d'iris acquise.

Dans cette image normalisée, les anneaux de subdivision de l'iris forment des lignes. Afin de transformer cette image normalisée en code binaire, dit code d'iris, un filtrage par un troisième nombre prédéterminé de filtres F, peut être appliqué, lors d'une étape de détermination de code binaire F 105, en chaque position parmi un quatrième nombre prédéterminé P de positions dans chaque anneau. L'iris peut par exemple être subdivisé angulairement en P régions angulaire et un tel filtrage peut alors être appliqué à chaque zone correspondant à l'intersection d'un anneau et d'un secteur angulaire. Dans l'image normalisée de l'iris chacun de ces secteurs angulaires constitue une colonne. De tels filtres peuvent être des filtres de Gabor, caractérisant les variations de luminosité de la texture de l'iris dans la zone auquel il est appliqué. Une valeur binaire 0 ou 1 peut alors être attribuée à chaque position en fonction du signe du résultat du filtrage sur cette position. Une opération similaire peut être réalisée sur le masque associé à l'image acquise. Un code binaire d'iris IC de taille égale à N2*P*F codant ladite région contenant la texture de l'iris normalisée et filtrée peut ainsi être déterminé. Un code binaire de masque IM de taille égale à N2*P*F codant le masque associé peut également être déterminé. Ces codes binaires peuvent être mis sous la forme de deux matrices de taille N2x(P*F) dont chaque ligne correspond à un anneau (comme dans l'image normalisée) et chaque groupe de P colonnes correspond à un secteur angulaire de l'image d'iris. La ligne 1 de chacune de ces matrices peut par exemple être associée à l'anneau le plus proche de la pupille. Dans un mode de mise en oeuvre N1 peut être égal à N2 et peut par exemple être égal à 8. A titre d'exemple, l'iris peut être subdivisé en 32 anneaux et en 64 régions angulaires et le nombre de filtres appliqués à chaque position peut être égal à 4.

Puis, lors d'une étape de mise en correspondance 106, chacun des N2 anneaux de l'iris de l'image acquise est mis en correspondance par l'algorithme de Viterbi avec les N1 anneaux d'un desdits iris de référence, de manière à minimiser une distance, dite distance de correspondance ($HD_{Viterbi}$), entre l'image acquise et l'image de référence, ladite distance de correspondance étant obtenue à partir des codes d'iris déterminé et de référence stocké et des codes de masque associés en calculant une somme de distances (Dist) entre chacun desdits au moins un anneau de l'iris de l'image acquise mis en correspondance et l'anneau de l'iris de référence qui lui correspond. L'étape de mise en correspondance 106 peut mettre en oeuvre un algorithme de Viterbi.

Plus précisément l'étape de mise en correspondance 106 comprend les étapes suivantes.

Une matrice de comparaison M de taille N1 *N2 est tout d'abord calculée $106_1$. Cette matrice de comparaison reflète le degré de ressemblance de chacun des N2 anneaux de l'iris de l'image acquise avec les N1 anneaux de l'iris de référence auquel il est comparé. Chaque coefficient M(i,j) de ladite matrice de comparaison code le résultat de la comparaison entre le ième anneau de l'iris de référence stocké et le jème anneau de l'iris de l'image acquise à l'aide desdits codes d'iris déterminé et de référence et des codes de masque associés. Chaque coefficient M(i,j) de ladite matrice de comparaison M peut être le résultat d'une transformation LT du rapport entre Dist(i,j,t) et Mask(i,j,t) pour un t fixé où :

$$\text{Dist}\,(i, j, t) = \sum_{p=1}^{P} \sum_{f=0}^{F-1} |IC1(i, p + f) - IC2(j, p + t + f)|,$$

$$\text{Mask}\,(i, j, t) = \sum_{p=1}^{P} \sum_{f=0}^{F-1} IM1(i, p + f) * IM2(j, p + t + f)$$

avec IC1, IC2, IM1 et IM2, des matrices de taille N1x(P*F) ou N2x(P*F) correspondant respectivement au code de l'iris de référence, au code de l'iris de l'image acquise, et aux codes de masque associés.

Le paramètre de rotation t permet de prendre en compte une rotation de l'iris autour de l'axe de symétrie de l'œil passant par le centre de la pupille entre l'image acquise et l'image de référence, par exemple du fait d'une inclinaison différente de la tête de l'individu. Une telle matrice peut être calculée pour chaque valeur du paramètre de rotation t à prendre en compte, par exemple pour toutes les valeurs de t multiples de F comprises dans l'intervalle [-T ; T] avec T une tolérance maximale prédéterminée à une rotation entre l'image acquise et l'image de référence.

Le résultat de la transformation LT peut correspondre à un niveau de gris représentatif du niveau de ressemblance entre les anneaux comparés. A titre d'exemple, la transformation peut attribuer la valeur 255 lors d'une distance nulle entre les anneaux comparés et une valeur nulle lorsque le rapport entre Dist(i,j,t) et Mask(i,j,t) est inférieur à 0.5. Plus deux anneaux comparés sont semblables, plus le niveau de gris associés à leur comparaison sera alors proche du blanc.

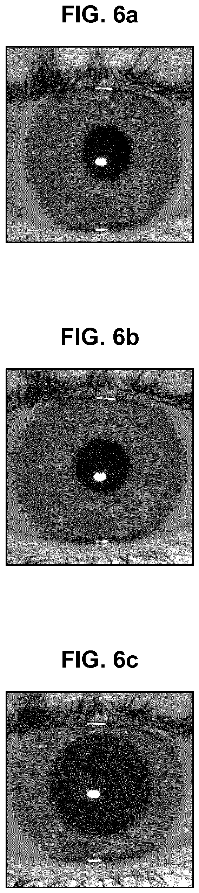

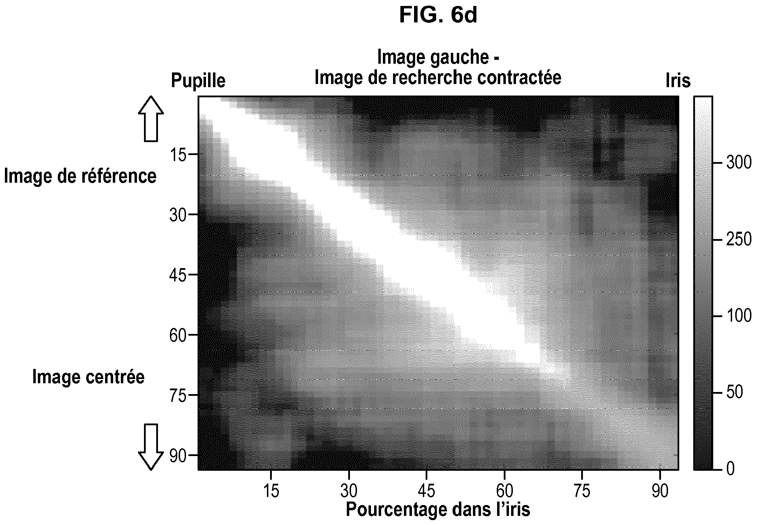

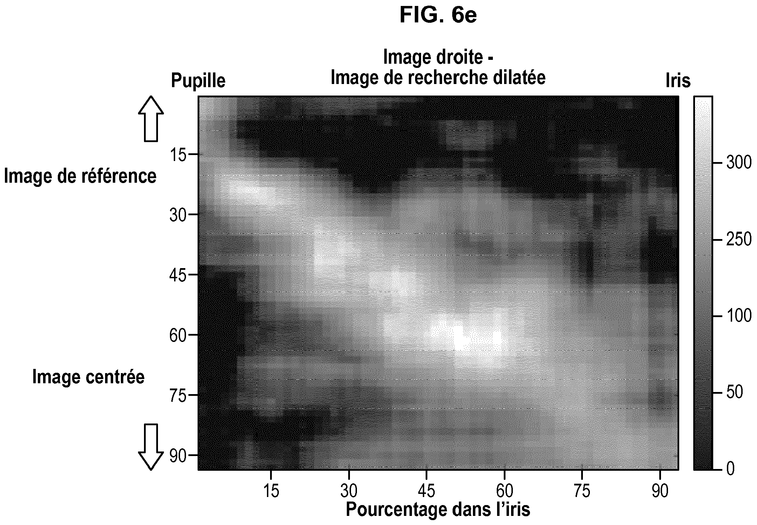

Deux exemples de matrices de comparaison sont représentés en **figure 6d** et **figure 6e**, la figure 6d correspondant à la comparaison de deux images d'oeil présentant une dilatation de pupille représentées en **figure 6a** et **figure 6b**, la figure 6e correspondant à la comparaison de l'image d'oeil de la figure 6a avec l'image d'oeil de la **figure 6c** présentant une dilatation de la pupille beaucoup plus prononcée. Sur la figure 6d, les pixels les plus blancs, correspondant aux distances les plus faibles entre anneaux, sont majoritairement situés le long de la diagonale de la matrice. Ceci est la conséquence d'une faible distorsion entre les iris des figures 6a et 6b. Chaque zone de l'iris de l'image acquise correspond alors à peu près à la zone de l'iris de référence placée à la même position dans l'image de référence. A l'inverse, les zones les plus claires de la figure 6e ne sont pas situées sur la diagonale de l'image, du fait de la grande différence de dilatation de pupille entre les images 6a et 6c.

Puis un treillis de Viterbi est construit $106_2$ dans lequel chaque mise en correspondance d'un anneau i de l'iris de référence et d'un anneau j de l'iris de l'image acquise a pour coût :

$$\text{pour } i = 1, \text{Cost}(i,j) = \text{Prob}(i,j) * M(i,j)$$

$$\text{pour tout } i > 1 : \text{Cost}(i, j) = \text{Prob}(i, j) * M(i, j) + \min_{L=li:ls \text{ et } k=kmin:kmax} \Big( \text{ProbT}\big((i, j), (i - L, j + k)\big) * \text{Cost}(i - L, j + k)\Big)$$

avec :

    ○ li, ls, kmin, kmax des entiers relatifs prédéterminés, avec li ≥ 1 et 0 < j+k ≤ N2,
    ○ Prob(i, j) une probabilité prédéterminée de correspondance du ième anneau de l'iris de référence et du jème anneau de l'iris de l'image acquise,
    ○ ProbT((i,j),(p,q)) une probabilité prédéterminée de correspondance du pème anneau de l'iris de référence et du qème anneau de l'iris de l'image acquise sachant la mise en correspondance du ième anneau de l'iris de référence et du jème anneau de l'iris de l'image acquise, la fonction ProbT étant par ailleurs définie de façon à renvoyer une valeur forfaitaire élevée pour les combinaisons de L et k correspondant à des cas non physiques tels que L=1 et k=1, correspondant à des correspondances croisées, par exemple l'anneau j+1 de l'iris de l'image acquise en correspondance avec l'anneau i-1 de l'iris de l'image de référence alors que l'anneau j de l'iris de l'image acquise a été mis en correspondance avec l'anneau i de l'iris de l'image de référence.
    Préférentiellement L=li=ls=1 et (kmin,kmax)=(0,1)

Le coût associé à la mise en correspondance de deux anneaux (i,j) est ainsi fonction de la probabilité intrinsèque Prob(i,j) que le ième anneau de l'iris de référence se soit déplacé à la position du jème anneau de l'iris de l'image acquise du fait de la distorsion de l'iris engendrée par la dilatation de la pupille dans l'image acquise. Ce coût reflète aussi le degré de similitude entre ces anneaux par le biais de M(i,j). Ce coût tient également compte de la correspondance établie pour un anneau précédent de l'iris de référence, de façon à respecter une cohérence globale dans les mises en correspondance et à éviter des correspondances numériquement séduisantes mais ne correspondant à aucune réalité physique, par exemple la mise en correspondance du ième anneau de l'iris de référence avec un anneau très centrale de l'iris de l'image acquise alors que le i-1 ème anneau de l'image de référence a été associé à un anneau périphérique de l'iris de l'image acquise.

Les fonctions Prob et ProbT peuvent être déterminées par apprentissage automatique sur une base d'image d'iris photographiés à différentes stades de dilatation. Alternativement, ces fonctions peuvent être déterminées de manière analytique en utilisant un modèle de distorsion de la texture de l'iris tel que le modèle de Clark cité ci-dessus. Les fonctions Prob et ProbT peuvent être tabulées en fonction du niveau de la dilatation de la pupille.

Un tel treillis de Viterbi peut être construit pour chacune des matrices de comparaison M calculées pour différentes valeurs du paramètre de rotation t.

Puis un chemin dans chacun desdits treillis de Viterbi est déterminé $106_3$ en :

o mettant en correspondance un Mème anneau de l'iris de référence avec le Path(M)ème anneau de l'iris de l'image acquise où Path(M) est l'indice appartenant à [1 ; N2] minimisant sur j (Cost(M,j)), avec M un entier inférieur ou égal au premier nombre prédéterminé N1,

c'est-à-dire Path(M) = Argmin$_{j=1:N2}$(Cost(M, j)), avec Argmin(x$_i$) la fonction renvoyant l'indice de la valeur minimum parmi la série de valeurs x$_i$. Ce même anneau de l'iris de référence sera l'anneau le plus à l'extérieur de l'iris mis en correspondance avec un anneau de l'iris de l'image acquise.

∘ mettant en correspondance au moins un autre anneau de l'iris de référence d'indice M' avec un anneau de l'iris de l'image acquise d'indice Path(M'), où M' < M, en fonction d'un anneau de l'iris de référence d'indice D déjà mis en correspondance avec un anneau de l'iris de l'image acquise d'indice Path(D) avec M' = D - Z(D, Path(D), 1) et Path(M') = Path(D) + Z(D, Path(D), 2), la fonction Z étant définie de R$^3$ dans R telle que Z(i,j,1) et Z(i,j,2) sont respectivement les entiers L ∈ [li,ls] et k ∈ [kmin, kmax] minimisant la fonction ProbT((i, j), (i - L, j + k)) * Cost (i - L,j + k)

$$\text{c'est-à-dire } (k,L) = \text{Argmin}_{k=kmin:kmax, L=li:ls} \text{ProbT}\big((i,j), (i - L, j + k)\big) * \text{Cost}(i - L, j + k).$$

Préférentiellement li=ls=1. On a alors : M' = D - 1 et Path(M') = Path(D) + k

avec k minimisant ProbT[(D, Path(D)),(D-1 ,Path(D)+k)] * Cost(D-1,Path(D)+k)

Cette mise en correspondance peut être déterminée successivement pour plusieurs anneaux de l'iris de référence par ordre décroissant de ceux-ci jusqu'à ce que i=1 ou bien jusqu'à ce que Path(i)=1 (le ième anneau de l'iris de l'image acquise, respectivement de référence, correspond alors à l'anneau central de l'iris de référence, respectivement de l'image acquise, ce qui signifie que la dilatation de la pupille dans l'image de référence, respectivement acquise, y a fait disparaitre tous les anneaux correspondant aux anneaux 1 à i-1 de l'image acquise, respectivement de référence).

Ce chemin de Viterbi permet de déterminer une correspondance minimisant le coût total du chemin et correspondant donc à la mise en correspondance la plus probable entre les anneaux des iris comparés, compte tenu de leur similitude et des probabilités de correspondance Prob(i,j) et ProbT((i,j),(p,q)).

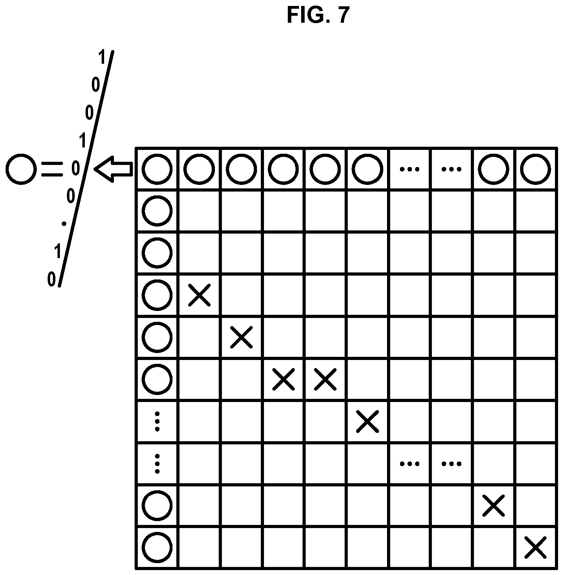

Un tel chemin est illustré en figure 7 dans lequel les ronds correspondent aux anneaux de l'iris de l'image acquise et de l'iris de référence et dans laquelle chaque croix figure la mise en correspondance entre un desdits anneaux de l'iris de l'image acquise et un desdits anneaux de l'iris de référence.

La distance de correspondance minimisée par cette mise en correspondance peut être une distance de Hamming calculée lors d'une étape de calcul 107 à l'aide de la formule suivante :

$$HD_{Viterbi} = MIN_{t=-T:T} \frac{\sum_{i=1}^{N} Dist(i, Path(i), t)}{1 + \sum_{i=1}^{N} Mask(i, Path(i), t)}$$

avec T une tolérance maximale prédéterminée à une rotation entre l'image acquise et l'image de référence,

La distance de correspondance ainsi obtenue entre les deux images d'iris est minimisée grâce au chemin de Viterbi choisi dans le graphe de Viterbi de façon à retenir la mise en correspondance la plus probable entre les anneaux des images comparées.

Enfin, lors d'une étape d'identification et/ou d'authentification 108, l'individu dont une image de l'oeil a été acquise est identifié et/ou authentifié, en fonction de la distance de correspondance minimisée obtenue lors de l'étape de calcul 107. L'individu peut être identifié ou authentifié si cette distance de correspondance minimisée est inférieure à un seuil prédéterminé.

L'individu dont une image de l'iris a été acquise peut ainsi être identifié ou authentifié par reconnaissance de son iris tout en tenant compte de la distorsion non linéaire ainsi que l'apparition ou la disparition de certaines zones de l'iris en fonction de la dilatation de la pupille, tout en tirant partie de la nature isotrope de ce mouvement, sans nécessiter un apprentissage spécifique à cet individu.

**Revendications**

**1.** Procédé d'identification et/ou d'authentification d'un individu (1) comprenant les étapes suivantes mises en oeuvre par un système d'identification et/ou d'authentification (100) d'un individu,

ledit système d'identification et/ou d'authentification d'un individu comprenant un dispositif de stockage (3) stockant au moins un code binaire d'un iris de référence obtenu à partir d'une image d'iris de référence divisé en un premier nombre prédéterminé N1 d'anneaux concentriques, et un code binaire de masque de référence associé identifiant des régions de l'iris de référence dans lesquelles des paupières, des cils, des réflexions ou d'autres sources de bruit ont été détectés :

- acquisition (101) d'une image d'un oeil de l'individu à identifier et/ou authentifier,
- segmentation (102) de l'image de l'œil acquise de sorte à isoler une région contenant la texture de l'iris et à déterminer un masque associé,
- division (103) de ladite région contenant la texture d'iris et dudit masque en un deuxième nombre N2 d'anneaux concentriques,
- normalisation (104) de ladite région contenant la texture de l'iris et dudit masque de coordonnées cartésiennes en coordonnées polaires,
- détermination (105) d'un code binaire d'iris IC de taille égale à N2*P*F codant ladite région contenant la texture de l'iris normalisée et d'un code binaire de masque IM de taille égale à N2*P*F codant le masque associé, par application d'un troisième nombre prédéterminé de filtres de Gabor F en chaque position parmi un quatrième nombre prédéterminé P de positions dans chaque anneau,
- mise en correspondance (106) par l'algorithme de Viterbi de chacun des N2 anneaux de l'iris de l'image acquise avec les N1 anneaux d'un desdits iris de référence, de manière à minimiser une distance de correspondance ($HD_{Viterbi}$), entre l'image acquise et l'image de référence, ladite distance de correspondance étant obtenue à partir des codes d'iris déterminé et de référence stocké et des codes de masque associés en calculant une somme de distances (Dist) entre chacun desdits N2 anneaux de l'iris de l'image acquise mis en correspondance et l'anneau de l'iris de référence qui lui correspond,
- calcul de ladite distance de correspondance minimisée (107),
- identification et/ou authentification de l'individu (108) si ladite distance de correspondance minimisée est inférieure à un seuil prédéterminé, .

2. Procédé d'identification et/ou d'authentification selon la revendication précédente dans lequel l'étape de mise en correspondance (106) comprend :

- un calcul ($106_1$) d'une matrice de comparaison M de taille N1*N2, chaque coefficient M(i,j) de ladite matrice de comparaison codant le résultat de la comparaison entre le ième anneau de l'iris de référence stocké et le jème anneau de l'iris de l'image acquise à l'aide desdits codes d'iris déterminé et de référence et des codes de masque associés,
- une construction d'un treillis de Viterbi ($106_2$) dans lequel chaque mise en correspondance d'un anneau i de l'iris de référence et d'un anneau j de l'iris de l'image acquise a pour coût :

$$\text{pour } i = 1, \text{Cost(i,j)=Prob(i,j)*M(i,j)}$$

$$\text{pour tout } i > 1 : \text{Cost}(i,j)$$
$$= \text{Prob}(i,j) * M(i,j)$$
$$+ \min_{L=li:ls \text{ et } k=kmin:kmax} \left( \text{ProbT}\big((i,j),(i-L,j+k)\big) * \text{Cost}(i-L,j+k) \right)$$

avec :

o li, ls, kmin, kmax des entiers relatifs prédéterminés, avec li $\geq$ 1 et 0 < j+k $\leq$ N2,
o Prob(i, j) une probabilité prédéterminée de correspondance du ième anneau de l'iris de référence et du jème anneau de l'iris de l'image acquise,
o ProbT((i,j),(p,q)) une probabilité prédéterminée de correspondance du pème anneau de l'iris de référence et du qème anneau de l'iris de l'image acquise sachant la mise en correspondance du ième anneau de l'iris de référence et du jème anneau de l'iris de l'image acquise,

- une détermination d'un chemin ($106_3$) dans ledit treillis de Viterbi comprenant :

o une mise en correspondance d'un Mème anneau de l'iris de référence avec le Path(M)ème anneau de l'iris de l'image acquise où Path(M) est l'indice appartenant à [1 ; N2] minimisant sur j (Cost(M,j)) avec M un entier inférieur ou égal au premier nombre prédéterminé N1,

o une mise en correspondance d'au moins un autre anneau de l'iris de référence d'indice M' avec un anneau de l'iris de l'image acquise d'indice Path(M'), où M' < M, en fonction d'un anneau de l'iris de référence d'indice D déjà mis en correspondance avec un anneau de l'iris de l'image acquise d'indice Path(D) avec M' = D - Z(D, Path(D), 1) et Path(M') = Path(D) + Z(D, Path(D), 2), la fonction Z étant définie de $R^3$ dans R telle que Z(i,j,1) et Z(i,j,2) sont respectivement les entiers $L \in [li,ls]$ et $k \in [kmin, kmax]$ minimisant la fonction ProbT((i, j), (i - L, j + k)) * Cost (i - L,j + k)

3. Procédé d'identification et/ou d'authentification selon la revendication précédente dans lequel le calcul (107) de la distance de correspondance minimisée est réalisé à l'aide de la formule

$$HD_{Viterbi} = MIN_{t=-T:T} \frac{\sum_{i=1}^{N} Dist(i, Path(i), t)}{1 + \sum_{i=1}^{N} Mask(i, Path(i), t)}$$

avec :

o T une tolérance maximale prédéterminée à une rotation entre l'image acquise et l'image de référence,
o IC1, IC2, IM1 et IM2, des matrices de taille N1x(P*F) ou N2x(P*F) correspondant respectivement au code de l'iris de référence, au code de l'iris de l'image acquise, et aux codes de masque associés,
o

$$Dist (i, j, t) = \sum_{p=1}^{P} \sum_{f=0}^{F-1} |IC1(i, p + f) - IC2(j, p + t + f)| ,$$

o

$$Mask (i, j, t) = \sum_{p=1}^{P} \sum_{f=0}^{F-1} IM1(i, p + f) * IM2(j, p + t + f)$$

4. Procédé d'identification et/ou d'authentification selon la revendication précédente dans lequel chaque coefficient M(i,j) de ladite matrice de comparaison M est le résultat d'une transformation LT du rapport entre Dist(i,j,t) et Mask(i,j,t) pour un t fixé.

5. Procédé d'identification et/ou d'authentification selon l'une des revendications 1 à 4 dans lequel les probabilités ProbT et Prob sont déterminées par apprentissage automatique ou en utilisant un modèle de distorsion de la texture de l'iris.

6. Procédé d'identification et/ou d'authentification selon l'une des revendications 1 à 5 dans lequel les probabilités ProbT et Prob sont fonction du niveau de dilatation de la pupille.

7. Produit programme d'ordinateur comprenant des instructions de code pour l'exécution d'un procédé d'identification et/ou d'authentification d'un individu selon l'une des revendications précédentes lorsque ce programme est exécuté par un processeur.

8. Dispositif de traitement de données (4) **caractérisé en ce qu'**il est susceptible d'être relié à un dispositif de stockage (3) stockant au moins un code binaire d'un iris de référence obtenu à partir d'une image d'iris de référence divisé en un premier nombre prédéterminé N1 d'anneaux concentriques, et un code binaire de masque de référence associé identifiant des régions de l'iris de référence dans lesquelles des paupières, des cils, des réflexions ou d'autres sources de bruit ont été détectés et **en ce qu'**il comprend :

- une interface de communication (6) configurée pour recevoir une image d'un oeil d'un individu à identifier et/ou authentifier acquise ;
- un calculateur (5) configuré pour :

o segmenter l'image de l'œil reçue de sorte à isoler une région contenant la texture de l'iris et à déterminer un masque associé,
o diviser ladite région contenant la texture d'iris et ledit masque en un deuxième nombre N2 d'anneaux concentriques,

◦ normaliser ladite région contenant la texture de l'iris et ledit masque de coordonnées cartésiennes en coordonnées polaires,

◦ déterminer un code binaire d'iris IC de taille égale à N2*P*F codant ladite région contenant la texture de l'iris normalisée et un code binaire de masque IM de taille égale à N2*P*F codant le masque associé, par application d'un troisième nombre prédéterminé de filtres de Gabor F en chaque position parmi un quatrième nombre prédéterminé P de positions dans chaque anneau,

◦ mettre en correspondance par l'algorithme de Viterbi de chacun des N2 anneaux de l'iris de l'image acquise avec les N1 anneaux d'un desdits iris de référence de manière à minimiser une distance de correspondance (HDViterbi), entre l'image acquise et l'image de référence, ladite distance de correspondance étant obtenue à partir des codes d'iris déterminé et de référence stocké et des codes de masque associés en calculant une somme de distances (Dist) entre chacun desdits N2 anneaux de l'iris de l'image acquise mis en correspondance et l'anneau de l'iris de référence qui lui correspond,

◦ calculer ladite distance de correspondance minimisée,

◦ comparer ladite distance de correspondance minimisée à un seuil prédéterminé, .

9. Système d'identification et/ou d'authentification (100) d'un individu comprenant :

- un dispositif de stockage (3) stockant au moins un code binaire d'un iris de référence obtenu à partir d'une image d'iris de référence divisé en un premier nombre prédéterminé N1 d'anneaux concentriques, et un code binaire de masque de référence associé identifiant des régions de l'iris de référence dans lesquelles des paupières, des cils, des réflexions ou d'autres sources de bruit ont été détectés,

- un dispositif de capture d'image (2) configuré pour acquérir une image d'un oeil de l'individu à identifier et/ou authentifier,

- un dispositif de traitement de données (4) selon la revendication 8 configuré pour minimiser une distance de correspondance (HD$_{Viterbi}$), entre l'image acquise et l'image de référence, et pour identifier et/ou authentifier l'individu si ladite distance de correspondance minimisée est inférieure à un seuil prédéterminé.

## Patentansprüche

1. Verfahren zur Identifizierung und/oder Authentifizierung einer Person (1), das die folgenden Schritte enthält, die von einem System zur Identifizierung und/oder Authentifizierung (100) einer Person durchgeführt werden, wobei das System zur Identifizierung und/oder Authentifizierung einer Person eine Speichervorrichtung (3) enthält, die mindestens einen Binärcode einer ausgehend von einem Bezugsirisbild erhaltenen Bezugsiris, die in eine erste vorbestimmte Anzahl N1 konzentrischer Ringe unterteilt ist, und einen Binärcode einer zugeordneten Bezugsmaske speichert, die Bereiche der Bezugsiris identifiziert, in denen Augenlider, Wimpern, Reflexionen oder andere Rauschquellen erkannt wurden:

- Erfassung (101) eines Bilds eines Auges der zu identifizierenden und/oder zu authentifizierenden Person,

- Segmentierung (102) des erfassten Bilds des Auges, um einen die Textur der Iris enthaltenden Bereich zu isolieren und um eine zugeordnete Maske zu bestimmen,

- Unterteilung (103) des die Iristextur enthaltenden Bereichs und der Maske in eine zweite Anzahl N2 konzentrischer Ringe,

- Normalisierung (104) des die Textur der Iris enthaltenden Bereichs und der Maske von kartesischen Koordinaten in Polarkoordinaten,

- Bestimmung (105) eines Iris-Binärcodes IC einer Größe gleich N2*P*F, der den die Textur der Iris enthaltenden normalisierten Bereich codiert, und eines Masken-Binärcodes IM einer Größe gleich N2*P*F, der die zugeordnete Maske codiert, durch Anwendung einer dritten vorbestimmten Anzahl von Gabor-Filtern F in jeder Position unter einer vierten vorbestimmten Anzahl P von Positionen in jedem Ring,

- Abgleich (106) durch den Viterbi-Algorithmus jedes der N2 Ringe der Iris des erfassten Bilds mit den N1 Ringen einer der Bezugsiris, um einen Abgleichabstand (HD$_{VIterbi}$) zwischen dem erfassten Bild und dem Bezugsbild zu minimieren, wobei der Abgleichabstand ausgehend von den bestimmten Iris- und gespeicherten Bezugsiris-Codes und den zugeordneten Maskencodes erhalten wird, indem eine Summe von Abständen (Dist) zwischen jedem der abgeglichenen N2 Ringe der Iris des erfassten Bilds und dem Ring der Bezugsiris, der ihm entspricht, berechnet wird,

- Berechnung des minimierten Abgleichabstands (107),

- Identifizierung und/oder Authentifizierung der Person (108), wenn der minimierte Abgleichabstand geringer als eine vorbestimmte Schwelle ist.

2. Verfahren zur Identifizierung und/oder Authentifizierung nach dem vorhergehenden Anspruch, wobei der Abgleichschritt (106) enthält:

- eine Berechnung ($106_1$) einer Vergleichsmatrix M der Größe N1*N2, wobei jeder Koeffizient M(i,j) der Vergleichsmatrix das Ergebnis des Vergleichs zwischen dem i-ten Ring der gespeicherten Bezugsiris und dem j-ten Ring der Iris des erfassten Bilds mit Hilfe der bestimmten Iris- und Bezugsiris-Codes und der zugeordneten Maskencodes codiert,
- eine Konstruktion eines Viterbi-Gitters ($106_2$), wobei jeder Abgleich eines Rings i der Bezugsiris und eines Rings j der Iris des erfassten Bilds als Kosten hat:

$$\text{für } i = 1, \text{ Cost}(i,j) = \text{Prob}(i,j) * M(i,j)$$

$$\text{für alle } i > 1 : \text{Cost}(i,j)$$
$$= \text{Prob}(i, j) * M(i,j)$$
$$+ \min_{L=Ii.Is \text{ und } k=kmin:kmax} (\text{ProbT}((i,j),(i-L,j+k)) * \text{Cost}(i-L,j+k))$$

mit:

o Ii, Is, kmin, kmax vorbestimmte ganze Zahlen, mit Ii $\geq$ 1 und 0 < j+k $\leq$ N2,
o Prob(i,j) eine vorbestimmte Wahrscheinlichkeit des Abgleichs des i-ten Rings der Bezugsiris und des j-ten Rings der Iris des erfassten Bilds,
o ProbT((i,j), (p,q)) eine vorbestimmte Wahrscheinlichkeit des Abgleichs des p-ten Rings der Bezugsiris und des q-ten Rings der Iris des erfassten Bilds, in Kenntnis des Abgleichs des i-ten Rings der Bezugsiris und des j-ten Rings der Iris des erfassten Bilds,

- eine Bestimmung eines Pfads ($106_3$) im Viterbi-Gitter, die enthält:

o einen Abgleich eines M-ten Rings der Bezugsiris mit dem Path(M)-ten Ring der Iris des erfassten Bilds, wobei Path(M) der zu [1; N2] gehörende Index minimierend auf j (Cost(M,j)) ist, mit M einer ganzen Zahl kleiner als die oder gleich der ersten vorbestimmten Zahl N1,
o einen Abgleich mindestens eines anderen Rings der Bezugsiris mit dem Index M' mit einem Ring der Iris des erfassten Bilds mit dem Index Path(M'), wobei M' < M, abhängig von einem Ring der Bezugsiris mit dem Index D, der bereits mit einem Ring der Iris des erfassten Bilds mit dem Index Path(D) abgeglichen wurde, mit M' = D - Z(D,Path(D),1) und Path(M') = Path(D) + Z(D,Path(D),2), wobei die Funktion Z von $R^3$ in R derart definiert ist, dass Z(i,j,1) und Z(i,j,2) je die ganzen Zahlen L $\in$ [Ii,Is] und k $\in$ [kmin, kmax] sind, die die Funktion ProbT((i,j),(i-L,j+k))*Cost(i-L,j+k) minimieren.

3. Verfahren zur Identifizierung und/oder Authentifizierung nach dem vorhergehenden Anspruch, wobei die Berechnung (107) des minimierten Abgleichabstands mit Hilfe der Formel durchgeführt wird

$$HD_{Viterbi} = MIN_{t=-T:T} \frac{\sum_{i=1}^{N} Dist(i, Path(i), t)}{1 + \sum_{i=1}^{N} Mask(i, Pat(i), t)}$$

mit:

o T einer vorbestimmten maximalen Toleranz gegenüber einer Drehung zwischen dem erfassten Bild und dem Bezugsbild,
o IC1, IC2, IM1 und IM2 Matrizen der Größe N1x(P*F) oder N2x(P*F) jeweils entsprechend dem Code der Bezugsiris, dem Code der Iris des erfassten Bilds und den zugeordneten Maskencodes,
o

$$Dist(i,j,t) = \sum_{p=1}^{P} \sum_{f=0}^{F-1} |IC1(i, p+f) - IC2(j, p+t+f)|$$

o

$$Mask(i,j,t) = \sum_{p=1}^{P} \sum_{f=0}^{F-1} IM1(i, p+f) * IM2(j, p+t+f)$$

4. Verfahren zur Identifizierung und/oder Authentifizierung nach dem vorhergehenden Anspruch, wobei jeder Koeffizient M(i,j) der Vergleichsmatrix M das Ergebnis einer Transformation LT des Verhältnisses zwischen Dist(i,j,t) und Mask(i,j,t) für ein festgelegtes t ist.

5. Verfahren zur Identifizierung und/oder Authentifizierung nach einem der Ansprüche 1 bis 4, wobei die Wahrscheinlichkeiten ProbT und Prob durch automatisches Lernen oder unter Verwendung eines Verzerrungsmodells der Textur der Iris bestimmt werden.

6. Verfahren zur Identifizierung und/oder Authentifizierung nach einem der Ansprüche 1 bis 5, wobei die Wahrscheinlichkeiten ProbT und Prob vom Erweiterungsgrad der Pupille abhängen.

7. Computerprogrammprodukt, das Codeanweisungen zur Ausführung eines Verfahrens zur Identifizierung und/oder Authentifizierung einer Person nach einem der vorhergehenden Ansprüche enthält, wenn dieses Programm von einem Prozessor ausgeführt wird.

8. Datenverarbeitungsvorrichtung (4), **dadurch gekennzeichnet, dass** sie mit einer Speichervorrichtung (3) verbunden werden kann, die mindestens einen Binärcode einer ausgehend von einem Bezugsirisbild erhaltenen Bezugsiris, die in eine erste vorbestimmte Anzahl N1 konzentrischer Ringe unterteilt ist, und einen zugeordneten Bezugsmaske-Binärcode speichert, der Bereiche der Bezugsiris identifiziert, in denen Augenlider, Wimpern, Reflexionen oder andere Rauschquellen erkannt wurden, und dass sie enthält:

  - eine Kommunikationsschnittstelle (6), die konfiguriert ist, ein erfassten Bild eines Auges einer zu identifizierenden und/oder zu authentifizierenden Person zu empfangen;
  - einen Rechner (5), der konfiguriert ist:

    o das empfangene Bild des Auges zu segmentieren, um einen Bereich zu isolieren, der die Textur der Iris enthält, und eine zugeordnete Maske zu bestimmen,
    o den die Iristextur und die Maske enthaltenden Bereich in eine zweite Anzahl N2 konzentrischer Ringe aufzuteilen,
    o den die Textur der Iris und die Maske enthaltenen Bereich von kartesischen Koordinaten in Polarkoordinaten zu normalisieren,
    o einen Iris-Binärcode IC einer Größe gleich N2*P*F, der den die Textur der Iris enthaltenden normalisierten Bereich codiert, und einen Masken-Binärcode IM einer Größe gleich N2*P*F, der die zugeordnete Maske codiert, durch Anwendung einer dritten vorbestimmten Anzahl von Gabor-Filtern F in jeder Position unter einer vierten vorbestimmten Anzahl P von Positionen in jedem Ring zu bestimmen,
    o durch den Viterbi-Algorithmus jeden der N2 Ringe der Iris des erfassten Bilds mit den N1 Ringen einer der Bezugsiris abzugleichen, um einen Abgleichabstand (HDViterbi) zwischen dem erfassten Bild und dem Bezugsbild zu minimieren, wobei der Abgleichabstand ausgehend von den Codes einer bestimmten Iris und einer gespeicherten Bezugsiris und den zugeordneten Maskencodes erhalten wird, indem eine Summe von Abständen (Dist) zwischen jedem der abgeglichenen N2 Ringe der Iris des erfassten Bilds und dem Ring der Bezugsiris, der ihm entspricht, berechnet wird,
    o den minimierten Abgleichabstand zu berechnen,
    o den minimierten Abgleichabstand mit einer vorbestimmten Schwelle zu vergleichen.

9. System zur Identifizierung und/oder Authentifizierung (100) einer Person, das enthält:

  - eine Speichervorrichtung (3), die mindestens einen Binärcode einer ausgehend von einem Bezugsirisbild erhaltenen Bezugsiris, die in eine erste vorbestimmte Anzahl N1 konzentrischer Ringe unterteilt ist, und einen Binärcode einer zugeordneten Bezugsmaske speichert, der Bereiche der Bezugsiris identifiziert, in denen Augenlider, Wimpern, Reflexionen oder andere Rauschquellen erfasst wurden,

- eine Bilderfassungsvorrichtung (2), die konfiguriert ist, ein Bild eines Auges der zu identifizierenden und/oder zu authentifizierenden Person zu erfassen,
- eine Datenverarbeitungsvorrichtung (4) nach Anspruch 8, die konfiguriert ist, einen Abgleichabstand ($HD_{VIterbi}$) zwischen dem erfassten Bild und dem Bezugsbild zu minimieren, und die Person zu identifizieren und/oder zu authentifizieren, wenn der minimierte Abgleichabstand geringer als eine vorbestimmte Schwelle ist.

**Claims**

1. Method for identifying and/or authenticating an individual (1), comprising the following steps carried out by a system (100) for identifying and/or authenticating an individual,
the said system for identifying and/or authenticating an individual comprising a storage device (3) storing at least one binary code of a reference iris, obtained from a reference iris image divided into a predetermined first number N1 of concentric rings, and one associated reference mask binary code identifying regions of the reference iris in which eyelids, eyelashes, reflections or other sources of noise have been detected:

- acquiring (101) an image of an eye of the individual to be identified and/or authenticated,
- segmenting (102) the acquired image of the eye so as to isolate a region containing the texture of the iris and to determine an associated mask,
- dividing (103) the said region containing the iris texture and the said mask into a second number N2 of concentric rings,
- normalizing (104) the said region containing the texture of the iris and the said mask from cartesian coordinates into polar coordinates,
- determining (105) a binary iris code IC having a size equal to N2*P*F encoding the said region containing the normalized texture of the iris, and a binary mask code IM having a size equal to N2*P*F encoding the associated mask, by applying a predetermined third number of Gabor filters F at each position among a predetermined fourth number P of positions in each ring,
- setting (106) each of the N2 rings of the iris of the acquired image in correspondence with the N1 rings of one of the said reference irises by the Viterbi algorithm so as to minimize a correspondence distance ($HD_{VIterbi}$) between the acquired image and the reference image, the said correspondence distance being obtained from the determined and stored-reference iris codes and the associated mask codes by calculating a sum of distances (Dist) between each of the said N2 rings of the iris of the acquired image set in correspondence and the ring of the reference iris which corresponds thereto,
- calculating (107) the said minimized correspondence distance,
- identifying and/or authenticating (108) the individual if the said minimized correspondence distance is less than a predetermined threshold.

2. Identification and/or authentication method according to the preceding claim, wherein the correspondence step (106) comprises:

- calculating ($106_1$) a comparison matrix M having a size N1*N2, each coefficient M(i,j) of the said comparison matrix encoding the result of the comparison between the $i^{th}$ ring of the stored-reference iris and the $j^{th}$ ring of the iris of the acquired image with the aid of the said determined and reference iris codes and the associated mask codes,
- constructing ($106_2$) a Viterbi lattice in which each correspondence of a ring i of the reference iris and a ring j of the iris of the acquired image has a cost:

```
for i = 1, Cost(i,j)=Prob(i,j)*M(i,j)
for all i > 1: Cost(i,j)
= Prob(i,j)*M(i,j)
+                          min_L=li:ls                          and
  k=kmin:kmax(ProbT((i,j),(i-L,j+k))*Cost(i-L,j+k))
```

with:

o li, ls, kmin, kmax predetermined relative integers, with li $\geq$ 1 and 0 < j+k $\leq$ N2,

o Prob(i,j) a predetermined probability of correspondence of the $i^{th}$ ring of the reference iris and the $j^{th}$ ring of the iris of the acquired image,

o ProbT((i,j), (p,q)) a predetermined probability of correspondence of the $p^{th}$ ring of the reference iris and the $q^{th}$ ring of the iris of the acquired image, knowing the correspondence of the $i^{th}$ ring of the reference iris and the $j^{th}$ ring of the iris of the acquired image,

- determining ($106_3$) a path in the said Viterbi lattice, comprising:

o setting an $M^{th}$ ring of the reference iris in correspondence with the Path(M)$^{th}$ ring of the acquired iris image, where Path(M) is the index belonging to [1;N2] minimizing (Cost(M,j)) over j, with M an integer less than or equal to the predetermined first number N1,

o setting at least one other ring of the reference iris of index M' in correspondence with a ring of the iris of the acquired image of index Path(M'), where M' < M, as a function of a ring of the reference iris of index D already set in correspondence with a ring of the iris of the acquired image of index Path(D), with M' = D-Z(D,Path(D),1)

and Path(M') = Path(D)+Z(D,Path(D),2), the function Z being defined for $R^3$ in R such that Z(i,j,1) and Z(i,j,2) are respectively the integers L e [li,ls] and k e [kmin, kmax] minimizing the function ProbT((i,j), (i-L,j+k)) *Cost (i-L,j+k) .

3. Identification and/or authentication method according to the preceding claim, wherein the calculation (107) of the minimized correspondence distance is carried out with the aid of the formula

$$HD_{Viterbi} = MIN_{t=-T:T} \frac{\sum_{i=1}^{N} Dist(i, Path(i), t)}{1 + \sum_{i=1}^{N} Mask(i, Path(i), t)}$$

with:

o T a predetermined maximum tolerance to a rotation between the acquired image and the reference image,

o IC1, IC2, IM1 and IM2 matrices having a size N1x(P*F) or N2x(P*F) corresponding respectively to the code of the reference iris, to the code of the iris of the acquired image and to the associated mask codes,

o

$$\text{Dist}(i, j, t) = \sum_{p=1}^{P} \sum_{f=0}^{F-1} |IC1(i, p + f) - IC2(j, p + t + f)| ,$$

o

$$\text{Mask}(i, j, t) = \sum_{p=1}^{P} \sum_{f=0}^{F-1} IM1(i, p + f) * IM2(j, p + t + f)$$

4. Identification and/or authentication method according to the preceding claim, wherein each coefficient M(i,j) of the said comparison matrix M is the result of a transformation LT of the ratio between Dist(i,j,t) and Mask(i,j,t) for a fixed t.

5. Identification and/or authentication method according to one of Claims 1 to 4, wherein the probabilities ProbT and Prob are determined by automatic learning or by using a distortion model of the texture of the iris.

6. Identification and/or authentication method according to one of Claims 1 to 5, wherein the probabilities ProbT and Prob are a function of the level of dilation of the pupil.

7. Computer program product comprising code instructions for carrying out a method for identifying and/or authenticating an individual according to one of the preceding claims when this program is executed by a processor.

8. Data processing device (4), **characterized in that** it is capable of being connected to a storage device (3) storing at least one binary code of a reference iris, obtained from a reference iris image divided into a predetermined first number N1 of concentric rings, and one associated reference mask binary code identifying regions of the reference iris in which eyelids, eyelashes, reflections or other sources of noise have been detected, and **in that** it comprises:

- a communication interface (6) configured to receive an acquired image of an eye of an individual to be identified and/or authenticated;
- a calculator (5) configured to:

o segment the received image of the eye so as to isolate a region containing the texture of the iris and to determine an associated mask,
o divide the said region containing the iris texture and the said mask into a second number N2 of concentric rings,
o normalize the said region containing the texture of the iris and the said mask from cartesian coordinates into polar coordinates,
o determine a binary iris code IC having a size equal to N2*P*F encoding the said region containing the normalized texture of the iris, and a binary mask code IM having a size equal to N2*P*F encoding the associated mask, by applying a predetermined third number of Gabor filters F at each position among a predetermined fourth number P of positions in each ring,
o set each of the N2 rings of the iris of the acquired image in correspondence with the N1 rings of one of the said reference irises by the Viterbi algorithm so as to minimize a correspondence distance (HDViterbi) between the acquired image and the reference image, the said correspondence distance being obtained from the determined and stored-reference iris codes and the associated mask codes by calculating a sum of distances (Dist) between each of the said N2 rings of the iris of the acquired image set in correspondence and the ring of the reference iris which corresponds thereto,
o calculate the said minimized correspondence distance,
o compare the said minimized correspondence distance with a predetermined threshold.

9. System (100) for identifying and/or authenticating an individual, comprising:

- a storage device (3) storing at least one binary code of a reference iris, obtained from a reference iris image divided into a predetermined first number N1 of concentric rings, and one associated reference mask binary code identifying regions of the reference iris in which eyelids, eyelashes, reflections or other sources of noise have been detected,
- an image capture device (2) configured to acquire an image of an eye of the individual to be identified and/or authenticated,
- a data processing device (4) according to Claim 8, configured to minimize a correspondence distance (HD$_{Viterbi}$) between the acquired image and the reference image and to identify and/or authenticate the individual if the said minimized correspondence distance is less than a predetermined threshold.

## FIG. 1

## FIG. 2

## FIG. 3a

## FIG. 3b

## FIG. 3c

EP 3 107 035 B1

**FIG. 4**

# FIG. 5

101 — **Acquisition image**

102 — **Segmentation**

103 — **Division**

104 — **Normalisation**

105 — **Détermination code binaire**

**Mise en correspondance**

106 —

$106_1$ — **Calcul matrice comparaison M**

$106_2$ — **Construction treillis de Viterbi**

$106_3$ — **Détermination chemin**

107 — **Calcul distance de correspondance**

108 — **Identification/Authentification**

## FIG. 6a

## FIG. 6b

## FIG. 6c

## FIG. 6d

Image gauche -
Image de recherche contractée

FIG. 6e

Image droite -
Image de recherche dilatée

**FIG. 7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5291560 A

**Littérature non-brevet citée dans la description**

- **HARRY WYATT.** A minimum wear-and-tear meshwork for the iris. *Vision Research,* 2000, vol. 40, 2167-2176
- **A. CLARK ; S. KULP ; I. HERRON ; A ; ROSS.** A theorical model for describing iris dynamics. *Handbook of Iris Récognition,* 2013, 129-150
- Enhancing Iris Matching Using Levenshtein Distance with Alignement Constraints. **ANDREAS UHL ; PETER WILD,.** Advances in Visual Computing : 6th International Symposium, (ISVC 2010). Springer Verlag, 2010, 469-479
- **MASEK et al.** *Recgnotion of Human Iris Patterns for Biométrie Identification*